# EUROPÄISCHE PATENTSCHRIFT

(11) **EP 1 736 690 B1**
(45) Veröffentlichungstag und Bekanntmachung des Hinweises auf die Patenterteilung: **05.11.2008**
(21) Anmeldenummer: 06008251.8
(22) Anmeldetag: 21.04.2006
(51) Int. Cl.: F16H 48/28, B60K 17/346, F16H 48/22, F16D 43/25

(54) **Lamellen-Sperrdifferential**
Multiple disc locking differential
Différentiel à verrouillage par disques multiples

(30) Priorität: 23.06.2005 DE 102005029087
(43) Veröffentlichungstag der Anmeldung: 27.12.2006
(73) Patentinhaber: Dr. Ing. h.c. F. Porsche Aktiengesellschaft, 70435 Stuttgart (DE)
(72) Erfinder: Rettenmaier, Markus, 70195 Stuttgart (DE)

(56) Entgegenhaltungen:
- DE-A1- 10 111 257
- DE-C1- 3 402 918
- PATENT ABSTRACTS OF JAPAN Bd. 1997, Nr. 01, 31. Januar 1997 (1997-01-31) & JP 08 247177 A (TOCHIGI FUJI IND CO LTD), 24. September 1996 (1996-09-24)

## Beschreibung

Die vorliegende Erfindung betrifft ein Lamellen-Sperrdifferential für einen Antriebsstrang eines Kraftfahrzeugs, insbesondere eines Personenkraftwagens, mit den Merkmalen des Oberbegriffs des Anspruchs 1. Die Erfindung betrifft außerdem ein mit einem derartigen Lamellen-Sperrdifferential ausgestattetes Kraftfahrzeug.

Lamellen-Sperrdifferentiale sind beispielsweise aus der DE 34 02 917 C1, der DE 34 02 918 C1 und aus der EP 0 619 444 B1 bekannt.

Ein derartiges Lamellen-Sperrdifferential umfasst ein Eingangs- oder Tellerrad, das von einer Eingangswelle angetrieben ist, sowie ein Ausgleichsgehäuse, das drehfest mit dem Tellerrad verbunden ist. Zwei Ausgangswellen weisen jeweils stirnseitig ein Wellenkegelrad auf, die über mehrere Ausgleichskegelräder antriebsgekoppelt sind. Desweiteren sind im Ausgleichsgehäuse zwei Druckringe angeordnet, die jeweils drehfest und axial verschiebbar am Ausgleichsgehäuse gehaltert sind und die an einander zugewandten inneren Stirnseiten die Ausgleichskegelräder lagern. Außerdem sind im Ausgleichsgehäuse zwei Lamellenpakete angeordnet, die jeweils axial zwischen einem der Druckringe und dem Ausgleichsgehäuse angeordnet sind und dabei mehrere Außenlamellen, die jeweils drehfest und axial verschiebbar am Ausgleichsgehäuse gehaltert sind, und mehrere Innenlamellen aufweisen, die jeweils drehfest und axial verschiebbar an einer der Ausgangswellen gehaltert sind.

Vorzugsweise verteilt das Sperrdifferential Antriebsleistung auf zwei Antriebsräder des Fahrzeugs. Dabei wird von der Eingangswelle ein Drehmoment über das Tellerrad und das Ausgleichsgehäuse auf die Druckringe übertragen. Wenn über beide Antriebsräder des Fahrzeugs das halbe Drehmoment auf die Fahrbahn übertragen wird, liegt an beiden Antriebsrädern eine gleich gute Bodenhaftung vor. In diesem Fall wird das über die Eingangswelle eingeleitete Drehmoment über das Tellerrad zum Ausgleichsgehäuse und über die Druckringe, die sich axial bewegen, zu den Lamellenpaketen und über diese auf die Ausgangswellen übertragen. Bei gleicher Drehzahl an beiden Antriebsrädern stehen in jedem Lamellenpaket die Innenlamellen relativ zu den Außenlamellen still; ebenso stehen die Ausgleichskegelräder relativ zu den Wellenkegelrädern still. Bei unterschiedlicher Bodenhaftung, wenn beispielsweise eines der Antriebsräder durchdreht, drehen sich die Ausgleichskegelräder. In der Folge drehen sich im betroffenen Lamellenpaket auch die Innenlamellen relativ zu den Außenlamellen. Durch die vorhandene Anpresskraft wird zwischen den schneller drehenden Innenlamellen und den Außenlamellen des durchdrehenden Antriebsrads ein lastabhängiges Reibmoment erzeugt. Dieses Reibmoment wird über das Ausgleichsgehäuse und über das andere Lamellenpaket über die andere Ausgangswelle auf das andere Antriebsrad übertragen. Das Reibmoment wirkt somit zusätzlich zum normalen Antriebsmoment am anderen (nicht durchdrehenden) Antriebsrad.

Bei modernen Personenkraftwagen, insbesondere bei Sportwagen, dienen Sperrdifferentiale in zunehmendem Maße zur Steigerung der Fahrdynamik und immer weniger dem Zweck der Traktionserhöhung. Die bei der Steigerung der Fahrdynamik zu übertragenden Momente sind jedoch deutlich geringer als die zur Traktionserhöhung zu übertragenden Momente. Dementsprechend könnte ein Sperrdifferential, das im wesentlichen nur zur Steigerung der Fahrdynamik dient, grundsätzlich deutlich kleiner dimensioniert werden als ein Sperrdifferential das zur Traktionserhöhung genutzt wird. Dies hätte Kostenvorteile und könnte über die damit verbundene Gewichtsreduzierung auch Verbrauchsvorteile bieten. Allerdings würde ein nur zur Steigerung der Fahrdynamik ausgelegtes Sperrdifferential im Fall einer maximalen Traktion überlastet. Die dabei eingebrachte Reibarbeit, die in erwünschtes Reibmoment und damit einhergehende unerwünschte Wärme umgesetzt wird, könnte zur Zerstörung der Lamellen führen.

Die vorliegende Erfindung beschäftigt sich mit dem Problem, für ein Lamellen-Sperrdifferential der eingangs genannten Art eine verbesserte Ausführungsform anzugeben, die insbesondere besser an eine Nutzung zur Steigerung der Fahrdynamik angepasst ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Lamellenpakete des Sperrdifferentials jeweils mit wenigstens einem Einlegeelement auszustatten, das in Abhängigkeit der Temperatur einer axialen Verpressung der Lamellen zwischen Ausgleichsgehäuse und dem jeweiligen Druckring entgegenwirkt. Die Erfindung nutzt hierbei die Erkenntnis, dass mit zunehmender Verpressung der Lamellen die Reibarbeit zunimmt, wobei die Reibarbeit zunehmend auch in Wärme ungesetzt wird. Bei maximaler Traktion führen daher nicht die auftretenden Momente, sondern die entstehenden Temperaturen zu einer Zerstörung der Lamellen. Mit Hilfe der erfindungsgemäß angeordneten Einlegeelemente führt eine zunehmende Temperatur in den Lamellenpaketen dazu, dass die axiale Verpressung reduziert wird. D.h., mit zunehmender Temperatur können die Lamellenpakete weniger Reibarbeit aufnehmen, wodurch eine weitere Umsetzung von Reibarbeit in Wärme reduziert wird. Dementsprechend ergibt sich hierdurch ein effektiver Überhitzungsschutz für die Lamellen der Lamellenpakete. Dabei wird beim erfindungsgemäßen Lamellen-Sperrdifferential bewusst in Kauf genommen, dass die Sperrwirkung des Sperrdifferentials bei zunehmender Temperatur reduziert wird und im Extremfall sogar unterbleibt, um das Sperrdifferential vor einer Beschädigung zu schützen. Dies ist jedoch für die überwiegende Mehrheit aller Betriebszustände von Fahrzeugen, bei denen das Lamellen-Sperrdifferential zur Steigerung der Fahrdynamik genutzt wird, ohne Nachteil, da die kritischen Temperaturerhöhungen regelmäßig nur bei großen Traktionswerten durch die damit verbundene große Reibarbeit auftreten, was jedoch bei solchen Fahrzeugen vergleichsweise selten vorkommt.

Das jeweilige Einlegeelement kann beispielsweise nach Art eines Abstandhalters zwischen benachbarten Außenlamellen angeordnet sein. Beispielsweise ist das jeweilige Einlegeelement unterhalb einer vorbestimmten Grenztemperatur quasi ohne Einfluss auf die axiale Verpressung der Innenlamellen und der Außenlamellen im jeweiligen Lamellenpaket. Vorzugsweise vergrößert das jeweilige Einlegeelement mit zunehmender Temperatur seine axiale Erstreckung, somit führt die zunehmende axiale Erstreckung des jeweiligen Einlegeelements mit zunehmender Temperatur zu einer Reduzierung der axialen Verpressung.

Das jeweilige Einlegeelement kann in axialer Richtung einen größeren thermischen Ausdehnungskoeffizienten aufweisen als die Druckringe und/oder die Lamellen. Zusätzlich oder alternativ kann das jeweilige Einlegeelement aus einem Memorymetall bestehen. Ebenso ist es möglich, das jeweilige Einlegeelement aus einem Bimetall herzustellen.

Das der Erfindung zugrunde liegende Problem wird auch durch ein Fahrzeug, insbesondere durch einen Personenkraftwagen, gelöst, der mit einem Lamellen-Sperrdifferential nach der Erfindung ausgestattet ist. Denn bei diesem Fahrzeug können die fahrdynamischen Eigenschaften verbessert werden, wobei gleichzeitig das reduzierte Gewicht des Sperrdifferentials die Verbrauchskosten des Fahrzeugs senkt.

Gemäß einer vorteilhaften Weiterbildung des Fahrzeugs kann eine Steuerung vorgesehen sein, die zur Realisierung einer Bremsdifferential-Funktion durch gezielte Bremseingriffe an einzelnen Räder ausgestaltet ist und die zumindest dann die Bremsdifferential-Funktion realisiert, wenn die Sperrwirkung des Lamellen-Sperrdifferentials bei zunehmender Temperatur abnimmt oder aufgehoben ist. Bei dieser Ausführungsform kann eine Traktionserhöhung beim Fahrzeug auch dann realisiert werden, wenn beim erfindungsgemäßen Lamellen-Sperrdifferential aufgrund hoher Temperaturen die Sperrwirkung reduziert oder sogar aufgehoben ist. Die Traktionserhöhung wird beim Fahrzeug dann über die Bremsanlage realisiert, indem eine geeignete Steuerung die Bremsdifferential-Funktion ermöglicht. Zur Realisierung einer derartigen Bremsdifferential-Funktion wird ein durchdrehendes Antriebsrad über ein diesem Antriebsrad zugeordnetes Bremsaggregat abgebremst, wodurch am anderen Antriebsrad mehr Drehmoment zur Verfügung steht.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

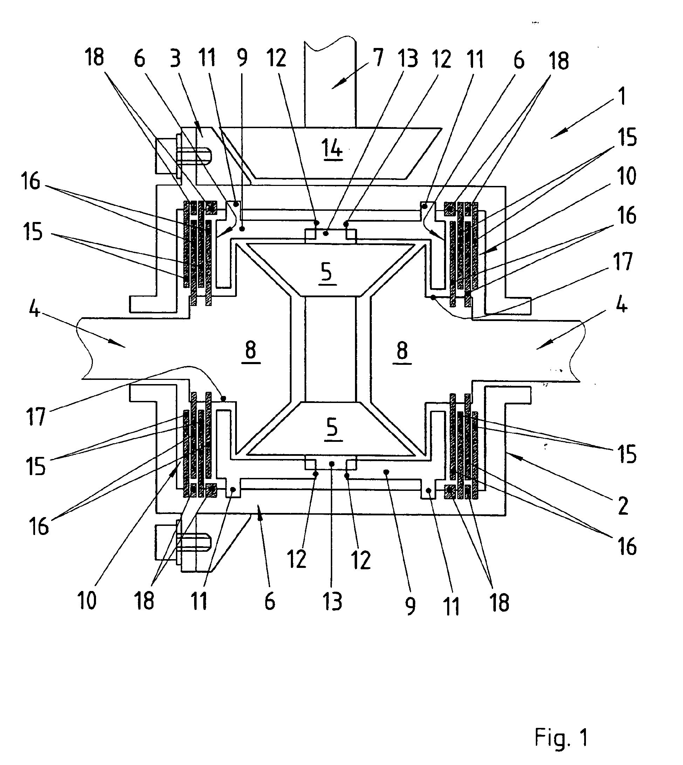

Die einzige Fig. 1 zeigt eine stark vereinfachte schematisierte Prinzipdarstellung eines erfindungsgemäßen Lamellen-Sperrdifferentials.

Entsprechend Fig. 1 umfasst ein erfindungsgemäßes Lamellen-Sperrdifferential 1 ein Ausgleichsgehäuse 2, ein Eingangsrad 3, zwei Ausgangswellen 4, zwei oder mehr Ausgleichskegelräder 5 sowie zwei Lamellenkupplungen 6. Das Lamellen-Sperrdifferential 1 ist für den Einbau in einen Antriebsstrang eines Kraftfahrzeugs, insbesondere eines Personenkraftwagens, vorzugsweise eines Sportwagens, vorgesehen. Dementsprechend ist das Eingangsrad 3 von einer Eingangswelle 7 des Antriebsstrangs antreibbar. Dabei ist die Eingangswelle 7 über ein Stirnkegelrad 14 mit dem Eingangsrad 3 antriebsverbunden, das ebenfalls als Kegelrad ausgestaltet ist.

Das Eingangsrad 3 ist drehfest mit dem Ausgleichsgehäuse 2 verbunden. Grundsätzlich kann das Eingangsrad 3 wie hier als Kegelrad bzw. als Tellerrad ausgestaltet sein; ebenso sind Ausführungen als Stirnrad oder Schneckenrad oder dergleichen möglich. Die Ausgangswellen 4 ragen mit ihren stirnseitigen Enden in das Ausgleichsgehäuse 2 hinein und weisen dort jeweils ein Wellenkegelrad 8 auf. Das jeweilige Wellenkegelrad 8 ist drehfest mit der jeweiligen Ausgangswelle 4 verbunden, insbesondere einstückig an dieser ausgebildet. Die Wellenkegelräder 8 sind über die Ausgleichskegelräder 5 miteinander antriebsgekoppelt.

Jede Lamellenkupplung 6 umfasst einen Druckring 9 sowie ein Lamellenpaket 10. Die beiden Druckringe 9 sind jeweils drehfest und axial verschiebbar am Ausgleichsgehäuse 2 gehaltert. Diese Halterung wird beispielsweise mittels nicht gezeigter axialer Längsnuten realisiert, die am Ausgleichsgehäuse 2 ausgebildet sind und in welche die Druckringe 9 mit entsprechenden Vorsprüngen 11 hineinragen. Die beiden Druckringe 9 lagern die Ausgleichskegelräder 5 an einander zugewandten inneren Stirnseiten 12. Die Ausgleichskegelräder 5 sind hierzu mit ihren Wellen 13 zwischen, insbesondere keilförmigen, Aussparungen angeordnet, die an den inneren Stirnseiten 12 der Druckringe 9 ausgebildet sind.

Jedes Lamellenpaket 10 besteht hier aus mehreren Außenlamellen 15 und mehreren Innenlamellen 16, wobei sich Innenlamellen 16 und Außenlamellen 15 in axialer Richtung abwechseln. Die Außenlamellen 15 sind jeweils drehfest und axial verschiebbar am Ausgleichsgehäuse 2 gehaltert. Auch dies erfolgt zweckmäßig über nicht näher bezeichnete radiale Vorsprünge der Außenlamellen 15, die in Längsnuten des Ausgleichsgehäuses 2 formschlüssig eingreifen. Im Unterschied dazu sind die Innenlamellen 16 jeweils drehfest und axial verschiebbar an einer der Ausgangswellen 4 gehaltert. Hierzu weisen die Innenlamellen 16 nicht näher bezeichnete, radial nach innen vorstehende Vorsprünge auf, die in eine entsprechende Axialverzahnung 17 eingreifen, die an der jeweiligen Ausgangswelle 4 ausgebildet ist.

Erfindungsgemäß ist nun jedes Lamellenpaket 10 zumindest mit einem Einlegeelement 18 ausgestattet. Die Einlegeelemente 18 sind dabei jeweils axial benachbart zu wenigstens einer der Außenlamellen 15 angeordnet. Im vorliegenden Fall befindet sich bei jedem Lamellenpaket 10 ein Einlegeelement 18 axial zwischen zwei benachbarten Außenlamellen 15 und jeweils ein Einlegeelement 18 axial zwischen dem zugehörigen Druckring 9 und der dazu benachbarten Außenlamelle 15.

Die Einlegeelemente 18 sind dabei so ausgestaltet, dass sie in Abhängigkeit der im jeweiligen Lamellenpaket 10 herrschenden Temperatur einer axialen Verpressung der Lamellen 15, 16, die im Betrieb des Lamellen-Sperrdifferentials 1 zwischen dem Ausgleichsgehäuse 2 und dem jeweiligen Druckring 9 auftritt, entgegenwirken. Hierdurch kann Reibarbeit reduziert werden, die bei Drehzahldifferenzen zwischen den Ausgangswellen 4 in den Lamellenkupplungen 6 auftritt und ursächlich für den Wärmeeintrag in das Sperrdifferential 1 und somit für dessen Temperaturerhöhung ist. In der Folge kann die Temperaturerhöhung reduziert bzw. gestoppt werden. Gleichermaßen geht dabei auch die Sperrwirkung des Sperrdifferentials 1 zurück.

Die Einlegelemente 18 sind hier jeweils am Ausgleichsgehäuse 2 gehaltert. Dabei können die Einlegeelemente 18 grundsätzlich drehfest und optional oder zusätzlich axial verschiebbar am Ausgleichsgehäuse 2 gehaltert sein. Beispielsweise können die Einlegeelemente 18 ebenfalls durch entsprechende, hier nicht näher bezeichnete radial nach außen vorstehende Vorsprünge in die Axialnuten des Ausgleichsgehäuses 2 eingreifen, ebenso wie die Druckringe 9 und die Außenlamellen 15.

Vorzugsweise handelt es sich bei den Einlegeelementen 18 um Ringkörper. Grundsätzlich sind jedoch auch andere Ausgestaltungsformen möglich. Beispielsweise können die Einlegeelemente 18 an den Außenlamellen 15 befestigt sein. Ebenso können mehrere Einlegeelemente 18 in Umfangsrichtung verteilt positioniert sein.

Bei der hier gezeigten, bevorzugten Ausführungsform ist jeder Innenlamelle 16 ein Einlegeelement 18 zugeordnet. Dabei befinden sich die jeweilige Innenlamelle 16 und das jeweils zugeordnete Einlegeelement 18 axial zwischen denselben Außenlamellen 15 bzw. axial zwischen dem Druckring 9 und der dazu benachbarten Außenlamelle 15.

Die Einlegelemente 18 sind so ausgestaltet, dass sie mit zunehmender Temperatur ihre axiale Erstreckung vergrößern. Dabei sind die einzelnen Einlegeelemente 18 vorzugsweise so ausgelegt, dass ihre thermisch bedingte Größenänderung in axialer Richtung größer ist als diejenige der jeweils zugeordneten Innenlamelle 16.

Vorzugsweise sind die Einlegeelemente 18 so ausgestaltet, dass sie erst ab einem vorbestimmten Temperaturgrenzwert der axialen Verpressung der Lamellen 15, 16 entgegenwirken. Erreicht wird dies beispielsweise dadurch, dass die axiale Erstreckung der Einlegeelemente 18 unterhalb des genannten Temperaturgrenzwerts kleiner ist als ein Axialabstand zwischen den beiden Außenlamellen 15, zwischen denen das jeweilige Einlegeelement 18 angeordnet ist, bzw. kleiner ist als der axiale Abstand zwischen dem Druckring 9 und der dazu benachbarten Außenlamelle 15, zwischen denen das jeweilige Einlegeelement 18 angeordnet ist. Bei einer axialen Verpressung der Lamellen 15, 16 kommt es somit zu keiner Kontaktierung zwischen den Einlegeelementen 18 einerseits und dem jeweiligen Druckring 9 bzw. den Außenlamellen 15 anderseits. Hinsichtlich ihrer thermischen Größenänderung in axialer Richtung erfolgt die Auslegung der Einlegeelemente 18 desweiteren zweckmäßig so, dass sie oberhalb des vorbestimmten Temperaturgrenzwerts in axialer Richtung größer sind als oder zumindest gleich groß sind wie eine axiale Dicke derjenigen Innenlamelle 16, die wie das jeweilige Einlegeelement 18 axial zwischen denselben Außenlamellen 15 bzw. axial zwischen dem Druckring 9 und der dazu benachbarten Außenlamelle 15 angeordnet ist. Auf diese Weise wird die axiale Verpressung der Lamellen 15, 16 innerhalb des jeweiligen Lamellenpakets 10 erheblich reduziert und im Extremfall - je nach Temperatur - sogar aufgehoben.

Beispielsweise können die Einlegeelemente 18 aus einem Werkstoff hergestellt sein, der in axialer Richtung einen größeren thermischen Ausdehnungskoeffizienten aufweist als die Druckringe 9 und/oder als die Lamellen 15, 16. Zusätzlich oder alternativ können die Einlegeelemente 18 aus einem Memorymetall bestehen, das beispielsweise beim gewünschten Temperaturgrenzwert eine Art Schalttemperatur aufweist und dabei seine axiale Dimension erheblich ändert. Ebenso ist es möglich, die Einlegeelemente 18 als Bimetalle auszugestalten die im Bereich des gewünschten Temperaturgrenzwerts eine erhebliche Formänderung durchführen.

Die erfindungsgemäße Bauweise sorgt für einen effizienten Überhitzungsschutz des Lamellen-Sperrdifferentials 1. Das Sperrdifferential 1 lässt sich dadurch bevorzugt dafür Auslegen, die fahrdynamischen Eigenschaften eines damit ausgestatteten Fahrzeugs zu steigern. Gleichzeitig kann das Sperrdifferential 1 verhältnismäßig klein gebaut werden, was mit entsprechenden Vorteilen hinsichtlich Baukosten, Gewicht und Kraftstoffverbrauch einhergeht.

Ein erfindungsgemäßes Fahrzeug, insbesondere ein Personenkraftwagen, vorzugsweise ein Sportwagen, weist einen Antriebsstrang zur Übertragung von Antriebsleistung zwischen einer Brennkraftmaschine und angetriebenen Rädern auf. In diesem Antriebsstrang ist zumindest ein Lamellen-Sperrdifferential 1 nach der vorliegenden Erfindung angeordnet. Beispielsweise befindet sich das Sperrdifferential 1 an einer Hinterachse des Fahrzeugs zwischen den beiden angetriebenen Hinterrädern. Bei einem Fahrzeug mit Frontantrieb kann sich des Sperrdifferential 1 an der Vorderachse zwischen den beiden angetriebenen Vorderrädern befinden. Bei einem Fahrzeug mit Vierradantrieb können zwei Sperrdifferentiale 1 vorgesehen sein, eines zwischen den vorderen Antriebsrädern und eines zwischen den hinteren Antriebsrädern. Darüber hinaus kann bei einem Fahrzeug mit Allradantrieb ein solches Sperrdifferential 1 auch so im Antriebsstrang angeordnet sein, dass es eine Leistungsverteilung zwischen der vorderen Antriebsachse und der hinteren Antriebsachse bewirkt.

Bei einer bevorzugten Ausführungsform kann besagtes Fahrzeug mit einer Steuerung ausgestattet sein, die mit einer geeigneten Bremsanlage des Fahrzeugs so gekoppelt ist, dass die Steuerung eines Bremsdifferential-Funktion durch gezielte Bremseingriffe an den einzelnen angetriebenen Rädern des Fahrzeugs realisieren kann. Diese Steuerung sorgt zumindest dann für diese Bremsdifferential-Funktion, wenn die Sperrwirkung des jeweiligen Lamellen-Sperrdifferentials 1 aufgrund zunehmender Temperatur abnimmt oder im Extremfall bereits aufgehoben ist. Auf diese Weise kann die relativ selten benötigte Traktionserhöhung für das jeweilige Fahrzeug mit Hilfe der Bremsdifferential-Funktion realisiert werden, während für die überwiegende Mehrheit der Fahrbetriebszustände des Fahrzeugs die Fahrdynamik des Fahrzeugs mit Hilfe des kompakten und leicht bauenden Lamellen-Sperrdifferentials 1 nach der Erfindung verbessert werden kann.

### Bezugszeichenliste

- 1: Lamellen-Sperrdifferential
- 2: Ausgleichsgehäuse
- 3: Eingangsrad
- 4: Ausgangswelle
- 5: Ausgleichskegelrad
- 6: Lamellenkupplung
- 7: Eingangswelle
- 8: Wellenkegelrad
- 9: Druckring
- 10: Lamellenpaket
- 11: Vorsprung
- 12: innere Stirnseite von 9
- 13: Welle
- 14: Stirnkegelrad
- 15: Außenlamelle
- 16: Innenlamelle
- 17: Axialverzahnung
- 18: Einlegeelement

## Patentansprüche

1. Lamellen-Sperrdifferential für einen Antriebsstrang eines Kraftfahrzeugs, insbesondere eines Personenkraftwagens,
- mit einem Eingangsrad (3), das von einer Eingangswelle (7) antreibbar ist,
- mit einem Ausgleichsgehäuse (2),
- mit zwei Ausgangswellen (4), die stirnseitig jeweils ein Wellenkegelrad (8) aufweisen,
- mit mehreren Ausgleichskegelrädern (5), welche die Wellenkegelräder (8) antriebskoppeln,
- mit zwei Druckringen (9), die jeweils drehfest und axial verschiebbar am Ausgleichsgehäuse (2) gehaltert sind und die an einander zugewandten inneren Stirnseiten (12) die Ausgleichskegelräder (5) lagern,
- mit zwei Lamellenpaketen (10), die jeweils axial zwischen einem der Druckringe (9) und dem Ausgleichsgehäuse (2) angeordnet sind und mehrere Außenlamellen (15), die jeweils drehfest und axial verschiebbar am Ausgleichsgehäuse (2) gehaltert sind, und mehrere Innenlamellen (16) aufweisen, die jeweils drehfest und axial verschiebbar an einer der Ausgangswellen (4) gehaltert sind,
**dadurch gekennzeichnet,**
- **dass** bei jedem Lamellenpaket (10) zumindest ein Einlegeelement (18) axial benachbart zu wenigstens einer Innenlamelle (16) oder zu wenigstens einer Außenlamelle (15) angeordnet ist,
- **dass** das jeweilige Einlegeelement (18) so ausgestaltet ist, dass es in Abhängigkeit der Temperatur einer axialen Verpressung der Lamellen (15, 16) zwischen dem Ausgleichsgehäuse (2) und dem jeweiligen Druckring (9) entgegenwirkt.

2. Lamellen-Sperrdifferential nach Anspruch 1, **dadurch gekennzeichnet,**
**dass** das jeweilige Einlegeelement (18) mit zunehmender Temperatur seine axiale Erstreckung vergrößert.

3. Lamellen-Sperrdifferential nach Anspruch 1 oder 2, **dadurch gekennzeichnet, dass** das jeweilige Einlegeelement (18) so ausgestaltet ist, dass seine thermisch bedingte Größenänderung in axialer Richtung größer ist als diejenige einer Lamelle (16), die zwischen denselben Komponenten der Gruppe Lamellen (15), Ausgleichsgehäuse (2) und Druckring (9) angeordnet ist, zwischen denen auch das jeweiligen Einlegeelement (18) angeordnet ist.

4. Lamellen-Sperrdifferential nach einem der Ansprüche 1 bis 3, **dadurch gekennzeichnet,**
- **dass** das jeweilige Einlegeelement (18) in axialer Richtung einen größeren thermischen Ausdehnungskoeffizienten aufweist als die Druckringe (9) oder die Lamellen (15, 16), und
- **dass** das jeweilige Einlegeelement (18) aus einem Memorymetall oder aus einem Bimetall besteht.

5. Lamellen-Sperrdifferential nach einem der Ansprüche 1 bis 4, **dadurch gekennzeichnet,**
- **dass** das jeweilige Einlegeelement (18) so ausgestaltet ist, dass es erst ab einem vorbestimmten Temperaturgrenzwert der axialen Verpressung der Lamellen (15, 16) entgegenwirkt, oder
- **dass** das jeweilige Einlegeelement (18) so ausgestaltet ist, dass seine axiale Erstreckung unterhalb eines vorbestimmten Temperaturgrenzwerts kleiner ist als ein axialer Abstand zwischen denjenigen Komponenten der Gruppe Lamellen (15), Ausgleichsgehäuse (2) und Druckring (9), zwischen denen das jeweilige Einlegeelement (18) angeordnet ist, oder
- **dass** das jeweilige Einlegeelement (18) so ausgestaltet ist, dass seine axiale Erstreckung oberhalb eines vorbestimmten Temperaturgrenzwerts größer ist als oder gleich groß ist wie eine axiale Dicke derjenigen Lamelle (16), die axial zwischen denselben Komponenten der Gruppe Lamellen (15), Ausgleichsgehäuse (2) und Druckring (9) angeordnet ist wie das jeweilige Einlegeelement (18).

6. Lamellen-Sperrdifferential nach einem der Ansprüche 1 bis 5, **dadurch gekennzeichnet,**
- **dass** zumindest ein Einlegeelement (18) am Ausgleichgehäuse (2) angeordnet ist, oder
- **dass** zumindest ein Einlegeelement (18) axial zwischen dem jeweiligen Druckring (9) und der dazu benachbarten Außenlamelle (15) am Ausgleichsgehäuse (2) angeordnet ist, oder
- **dass** zumindest ein Einlegeelement (18) axial zwischen zwei benachbarten Außenlamellen (15) am Ausgleichsgehäuse (2) angeordnet ist, oder
- **dass** jeder Innenlamelle (16) ein Einlegeelement (18) zugeordnet ist, das zwischen denselben Komponenten der Gruppe Außenlamellen (15), Druckring (9) und Ausgleichgehäuse (2) angeordnet ist, zwischen denen auch die jeweilige Innenlamelle (16) angeordnet ist, oder
- **dass** zumindest ein Einlegeelement (18) am Ausgleichsgehäuse (2) drehfest oder axial verschiebbar gehaltert ist, oder
- **dass** zumindest ein Einlegeelement (18) als Ringkörper ausgestaltet ist.

7. Lamellen-Sperrdifferential nach einem der Ansprüche 1 bis 6, **dadurch gekennzeichnet, dass** das jeweilige Einlegeelement (18) in Abhängigkeit der im jeweiligen Lamellenpaket (10) herrschenden Temperatur der axialen Verpressung der Lamellen (15, 16) entgegenwirkt.

8. Lamellen-Sperrdifferential nach einem der Ansprüche 1 bis 7, **dadurch gekennzeichnet,**
- **dass** das Ausgleichsgehäuse, (2) drehfest mit dem Eingangsrad (3) verbunden ist und
- **dass** das Eingangsrad (3) als Tellerrad oder als Stirnrad oder als Kegelrad oder als Schneckenrad ausgestaltet ist.

9. Fahrzeug, insbesondere Personenkraftwagen, mit einem Antriebsstrang zur Übertragung von Abtriebsleistung zwischen einer Brennkraftmaschine des Fahrzeugs und angetriebenen Rädern des Fahrzeugs, **dadurch gekennzeichnet, dass** der Antriebsstrang wenigstens ein Lamellen-Sperrdifferential (1) nach einem der Ansprüche 1 bis 8 enthält.

10. Fahrzeug nach Anspruch 9, **dadurch gekennzeichnet, dass** für den Antriebsstrang eine Steuerung vorgesehen ist, die zur Realisierung einer Bremsdifferential-Funktion durch gezielte Bremseingriffe an einzelnen Rädern ausgestaltet ist, wobei die Bremsdifferential-Funktion realisierbar ist, wenn die Sperrwirkung des Lamellen-Sperrdifferentials (1) bei zunehmender Temperatur abnimmt oder aufgehoben ist.

## Claims

1. Multiple disc locking differential for a drivetrain of a motor vehicle, in particular of a passenger motor vehicle,
- having an input gear (3) which can be driven by an input shaft (7),
- having a differential housing (2),
- having two output shafts (4) which, at the end side, have in each case one shaft bevel gear (8),
- having a plurality of differential bevel gears (5) which couple the shaft bevel gears (8) in terms of drive,
- having two pressure rings (9) which are retained in each case in a rotationally fixed and axially movable manner on the differential housing (2) and which, at inner end sides (12) which face toward one another, serve to mount the differential bevel gears (5),
- having two plate packs (10) which are arranged in each case axially between one of the pressure rings (9) and the differential housing (2) and which have a plurality of outer plates (15), which are retained in each case in a rotationally fixed and axially movable manner on the differential housing (2), and a plurality of inner plates (16), which are retained in each case in a rotationally fixed and axially movable manner on one of the output shafts (4),
**characterized**
- **in that**, in each plate pack (10), at least one insert element (18) is arranged axially adjacent to at least one inner plate (16) or to at least one outer plate (15),
- **in that** the respective insert element (18) is designed such that, as a function of temperature, it counteracts an axial pressing of the plates (15, 16) between the differential housing (2) and the respective pressure ring (9).

2. Multiple disc locking differential according to Claim 1, **characterized in that** the axial extent of the respective insert element (18) increases with increasing temperature.

3. Multiple disc locking differential according to Claim 1 or 2, **characterized in that** the respective insert element (18) is designed such that its thermally induced change in size in the axial direction is greater than that of a plate (16) which is arranged between the same components, of the group comprising the plates (15), differential housing (2) and pressure ring (9), as the respective insert element (18).

4. Multiple disc locking differential according to one of Claims 1 to 3, **characterized**
- **in that** the respective insert element (18) has a greater thermal expansion coefficient in the axial direction than the pressure rings (9) or the plates (15, 16), and
- **in that** the respective insert element (18) is composed of a memory metal or a bimetal.

5. Multiple disc locking differential according to one of Claims 1 to 4, **characterized**
- **in that** the respective insert element (18) is designed so as to counteract the axial pressing of the plates (15, 16) only above a predetermined temperature limit value, or
- **in that** the respective insert element (18) is designed such that its axial extent below a predetermined temperature limit value is smaller than an axial spacing between those components, of the group comprising the plates (15), differential housing (2) and pressure ring (9), between which the respective insert element (18) is arranged, or
- **in that** the respective insert element (18) is designed such that its axial extent above a predetermined temperature limit value is greater than or equal to an axial thickness of that plate (16) which is arranged axially between the same components, of the group comprising the plates (15), differential housing (2) and pressure ring (9), as the respective insert element (18).

6. Multiple disc locking differential according to one of Claims 1 to 5, **characterized**
- **in that** at least one insert element (18) is arranged on the differential housing (2), or
- **in that** at least one insert element (18) is arranged axially between the respective pressure ring (9) and the outer plate (15), which is arranged adjacent thereto, on the differential housing (2), or
- **in that** at least one insert element (18) is arranged axially between two adjacent outer plates (15) on the differential housing (2), or
- **in that** each inner plate (16) is assigned an insert element (18) which is arranged between the same components, of the group comprising the outer plates (15), pressure ring (9) and differential housing (2), as the respective inner plate (16), or
- **in that** at least one insert element (18) is retained in a rotationally fixed or axially movable manner on the differential housing (2), or
- **in that** at least one insert element (18) is designed as an annular body.

7. Multiple disc locking differential according to one of Claims 1 to 6, **characterized in that** the respective insert element (18) counteracts the axial pressing of the plates (15, 16) as a function of the temperature prevailing in the respective plate pack (10).

8. Multiple disc locking differential according to one of Claims 1 to 7, **characterized**
- **in that** the differential housing (2) is rotationally fixedly connected to the input gear (3) and
- **in that** the input gear (3) is embodied as a crown gear or as a spur gear or as a bevel gear or as a worm gear.

9. Vehicle, in particular passenger motor vehicle, having a drivetrain for transmitting drive power between an internal combustion engine of the vehicle and driven wheels of the vehicle, **characterized in that** the drivetrain comprises at least one multiple disc locking differential (1) according to one of Claims 1 to 8.

10. Vehicle according to Claim 9, **characterized in that** a controller is provided for the drivetrain, which controller is designed so as to realize a brake differential function by means of targeted braking interventions at individual wheels, wherein the brake differential function may be realized if the locking action of the multiple disc locking differential (1) decreases, or has been deactivated, with increasing temperature.

## Revendications

1. Différentiel à verrouillage à disques pour une transmission d'un véhicule automobile, en particulier d'un véhicule automobile, comprenant
- une roue d'entrée (3) qui peut être entraînée par un arbre d'entrée (7),
- un carter de compensation (2),
- deux arbres de sortie (4), qui présentent chacun du côté frontal une roue conique d'arbre (8),
- plusieurs roues coniques de compensation (5) qui accouplent en transmission les roues coniques d'arbre (8),
- deux bagues de pression (9) qui sont fixées à chaque fois de manière solidaire en rotation et de manière déplaçable axialement sur le carter de compensation (2) et qui supportent au niveau de côtés frontaux (12) internes tournés l'un vers l'autre, les roues coniques de compensation (5),
- deux paquets de disques (10), qui sont disposés à chaque fois axialement entre l'une des bagues de pression (9) et le carter de compensation (2) et qui présentent plusieurs disques extérieurs (15), qui sont fixés à chaque fois de manière solidaire en rotation et de manière déplaçable axialement sur le carter de compensation (2), et plusieurs disques intérieurs (16), qui sont fixés à chaque fois de manière solidaire en rotation et de manière déplaçable axialement sur l'un des arbres de sortie (4),
**caractérisé en ce que**
- pour chaque paquet de disques (10), au moins un élément d'insertion (18) est disposé axialement à proximité d'au moins un disque intérieur (16) ou d'au moins un disque extérieur (15),
- **en ce que** l'élément d'insertion respectif (18) est configuré de telle sorte qu'il agisse à l'encontre d'une compression axiale des disques (15, 16) entre le carter de compensation (2) et la bague de pression respective (9) en fonction de la température.

2. Différentiel à verrouillage à disques selon la revendication 1, **caractérisé en ce que** l'élément d'insertion respectif (18) augmente son étendue axiale avec l'augmentation de la température.

3. Différentiel à verrouillage à disques selon la revendication 1 ou 2, **caractérisé en ce que** l'élément d'insertion respectif (18) est configuré de telle sorte que sa variation de taille due à la chaleur soit plus importante dans la direction axiale que celle d'un disque (16) qui est disposé entre les mêmes composants du groupe constitué des disques (15), du carter de compensation (2) et de la bague de pression (9), entre lesquels l'élément d'insertion respectif (18) est également disposé.

4. Différentiel à verrouillage à disques selon l'une quelconque des revendications 1 à 3, **caractérisé en ce que**
- l'élément d'insertion respectif (18) présente dans la direction axiale un plus gros coefficient de dilatation thermique que les bagues de pression (9) ou les disques (15, 16), et
- **en ce que** l'élément d'insertion respectif (18) se compose d'un métal à mémoire ou d'une bilame.

5. Différentiel à verrouillage à disques selon l'une quelconque des revendications 1 à 4, **caractérisé en ce que**
- l'élément d'insertion respectif (18) est configuré de telle sorte qu'il n'agisse à l'encontre de la compression axiale des disques (15, 16) qu'à partir d'une valeur limite de température prédéterminée, ou
- **en ce que** l'élément d'insertion respectif (18) est configuré de telle sorte que son étendue axiale soit inférieure, en dessous d'une valeur limite de température prédéterminée, à une distance axiale entre les composants respectifs du groupe constitué des disques (15), du carter de compensation (2) et de la bague de pression (9), entre lesquels l'élément d'insertion respectif (18) est disposé, ou
- **en ce que** l'élément d'insertion respectif (18) est configuré de telle sorte que son étendue axiale soit supérieure ou égale, au-dessus d'une valeur limite de température prédéterminée, à une épaisseur axiale du disque (16) qui est disposé axialement entre les mêmes composants du groupe constitué des disques (15), du carter de compensation (2) et de la bague de pression (9), que l'élément d'insertion respectif (18).

6. Différentiel à verrouillage à disques selon l'une quelconque des revendications 1 à 5, **caractérisé en ce qu'**
- au moins un élément d'insertion (18) est disposé sur le carter de compensation (2), ou
- **en ce qu'**au moins un élément d'insertion (18) est disposé axialement entre la bague de pression respective (9) et le disque extérieur (15) qui lui est adjacent, au niveau du carter de compensation (2), ou
- **en ce qu'**au moins un élément d'insertion (18) est disposé axialement entre deux disques extérieurs adjacents (15) au niveau du carter de compensation (2), ou
- **en ce que** chaque disque intérieur (16) est associé à un élément d'insertion (18), qui est disposé entre les mêmes composants du groupe constitué des disques extérieurs (15), de la bague de pression (9) et du carter de compensation (2), entre lesquels est également disposé le disque intérieur respectif (16), ou
- **en ce qu'**au moins un élément d'insertion (18) est fixé de manière solidaire en rotation ou de manière déplaçable axialement sur le carter de compensation (2), ou
- **en ce qu'**au moins un élément d'insertion (18) est configuré sous forme de corps annulaire.

7. Différentiel à verrouillage à disques selon l'une quelconque des revendications 1 à 6, **caractérisé en ce que** l'élément d'insertion respectif (18) agit à l'encontre de la compression axiale des disques (15, 16) en fonction de la température régnant dans le paquet de disques respectif (10).

8. Différentiel à verrouillage à disques selon l'une quelconque des revendications 1 à 7, **caractérisé en ce que**
- le carter de compensation (2) est connecté de manière solidaire en rotation à la roue d'entrée (3) et
- **en ce que** la roue d'entrée (3) est configurée sous forme de couronne ou sous forme de pignon droit ou sous forme de roue conique ou sous forme de roue à denture hélicoïdale.

9. Véhicule, en particulier voiture particulière, comprenant une transmission pour le transfert de la puissance de sortie entre un moteur à combustion interne du véhicule et les roues entraînées du véhicule, **caractérisé en ce que** la transmission contient au moins un différentiel à verrouillage à disques (1) selon l'une quelconque des revendications 1 à 8.

10. Véhicule selon la revendication 9, **caractérisé en ce que** pour la transmission, on prévoit une commande qui est configurée pour la mise en oeuvre d'une fonction de différentiel à glissement limité par une intervention spécifique sur les freins, au niveau des roues individuelles, la fonction de différentiel à glissement limité pouvant être réalisée lorsque l'effet de verrouillage du différentiel à verrouillage à disques (1) diminue ou est supprimé en cas d'augmentation de la température.
